# EUROPÄISCHE PATENTSCHRIFT

(11) **EP 3 497 946 B1**
(45) Veröffentlichungstag und Bekanntmachung des Hinweises auf die Patenterteilung: **11.03.2020**
(21) Anmeldenummer: 17808840.7
(22) Anmeldetag: 23.11.2017
(51) Int. Cl.: H04W 4/02, H04W 4/46

(54) **AUFBAU EINER DIREKTEN KOMMUNIKATIONSVERBINDUNG MIT EINEM FREMDFAHRZEUG IN EINER UMGEBUNG EINES KRAFTFAHRZEUGS**
ESTABLISHING A DIRECT COMMUNICATION LINK WITH AN OTHER VEHICLE IN THE VICINITY OF A MOTOR VEHICLE
ÉTABLISSEMENT D'UNE LIAISON DE COMMUNICATION DIRECTE AVEC UN VÉHICULE ÉTRANGER DANS UN ENVIRONNEMENT D'UN VÉHICULE À MOTEUR

(30) Priorität: 21.12.2016 DE 102016225746
(43) Veröffentlichungstag der Anmeldung: 19.06.2019
(73) Patentinhaber: Audi AG, 85045 Ingolstadt (DE)
(72) Erfinder: HOLZMANN, Manfred, 91171 Greding (DE)
(86) Internationale Anmeldenummer: PCT/EP2017/080211
(87) Internationale Veröffentlichungsnummer: WO 2018/114208

(56) Entgegenhaltungen:
- US-A1- 2012 038 489
- US-A1- 2013 086 164

## Beschreibung

Die Erfindung betrifft ein Verfahren zum Aufbau einer Kommunikationsverbindung eines Kraftfahrzeugs mit einem sich in dessen Umgebung befindlichen weiteren Kraftfahrzeug. Dabei wird für einen Nutzer des Kraftfahrzeugs eine virtuelle Übersicht erstellt, anhand derer der Nutzer das weitere Kraftfahrzeug als Kommunikationspartner auswählen kann. Ein zweiter Aspekt der Erfindung betrifft ein Kraftfahrzeug mit einer Kommunikationseinrichtung zum Aufbauen der besagten Kommunikationsverbindung.

Aus dem Stand der Technik bekannt sind beispielsweise Mobiltelefone, welche mit einem Kraftfahrzeug gekoppelt werden können und eine Kommunikationsverbindung über das Mobilfunknetz ermöglichen. Dabei wird eine Kommunikationsverbindung zwischen einem Nutzer des Mobiltelefons in dem Kraftfahrzeug und einem weiteren Nutzer eines weiteren Telefons aufgebaut. Für einen zielgerichteten Aufbau der Kommunikationsverbindung ist zunächst ein Austausch der jeweiligen Telefonnummer nötig.

Außerdem stellt der Stand der Technik Funkgeräte als Kommunikationseinrichtungen bereit, mittels welcher Funksprüche von einem Kraftfahrzeug, üblicherweise einem Lastkraftwagen, gesendet werden können, welche von allen weiteren Fahrzeugen in einer Umgebung des Kraftfahrzeugs empfangen werden können, wenn sie eine korrespondierende Kommunikationseinrichtung aufweisen. In diesem Fall ist der Aufbau einer direkten und offenen Kommunikationsverbindung mit beliebigen weiteren Fahrzeugen, die sich in der Umgebung des Kraftfahrzeugs befinden, möglich. Der zielgerichtete Aufbau einer Kommunikationsverbindung mit nur einem oder mehreren ausgewählten Fahrzeugen ist nicht möglich.

Die DE 10 2004 056 724 A1 offenbart in diesem Kontext ein Verfahren zur Übertragung von Daten über eine direkte Kommunikationsverbindung von einem Kraftfahrzeug und zumindest einem weiteren Fahrzeug. Dabei kann die Kommunikationsverbindung unter Verwendung von Sicherheitszertifikaten verschlüsselt werden.

Die DE 10 2006 041 569 A1 stellt ein Verfahren zur Verfügung, durch welches eine Reichweite einer Kommunikationsverbindung zwischen einem Kraftfahrzeug und einem weiteren Fahrzeug gegenüber einer direkten Kommunikationsverbindung erhöht werden kann. Dabei empfängt ein Zwischenknoten Funksignale des Kraftfahrzeugs und des weiteren Fahrzeugs und sendet diese weiter.

Die US 2012/003 84 89 A1 zeigt ein Verfahren, welches einem Nutzer einen spontanen Anruf eines nahen Kraftfahrzeugs ohne Kenntnis einer Telefonnummer oder spezifischer Kontaktdetails basierend auf Identifikationsmerkmalen des nahen Kraftfahrzeugs, welche für den Nutzer sichtbar sind, ermöglicht. Hierzu werden dem Nutzer des Kraftfahrzeugs die sichtbaren Identifikationsmerkmale angezeigt.

Die JP 2014 035 582 A betrifft ein Kraftfahrzeugkommunikationsgerät mit einer Informationsermittlungseinheit, welche Informationen betreffend ein Kommunikationsziel ermittelt, sowie mit einem Kommunikationszielanzeigegerät, welches auf Basis der ermittelten Informationen ein Fahrzeug als das kontaktierbare Kommunikationsziel ausweist und Informationen anzeigt, welche die Position des Fahrzeugs angeben. Außerdem umfasst das Kraftfahrzeugkommunikationsgerät eine Kommunikationsverbindungseinheit, welche auf eine Auswahl des angezeigten Kommunikationsziels hin eine Kommunikationsverbindung mit dem ausgewählten Kommunikationsziel aufbaut.

Die US 2013/0086164 A1 offenbart ein Verfahren, in welchem Fahrzeuge in einer Umgebung eines Nutzers diesem auf einer Anzeige dargestellt werden. Daraufhin kann der Nutzer eine Kommunikation mit allen Fahrzeugen initiieren ("broadcast"), um ein bestimmtes Fahrzeug zu identifizieren. Antwortet das bestimmte Fahrzeug, so kann der Nutzer dieses mit einem in der Anzeige dargestellten Fahrzeug verknüpfen.

Es ist Aufgabe der vorliegenden Erfindung, einem Nutzer eines Kraftfahrzeugs den Aufbau einer Kommunikationsverbindung des Kraftfahrzeugs mit einem weiteren Fahrzeug in einer Umgebung des Kraftfahrzeugs zu ermöglichen.

Diese Aufgabe wird erfindungsgemäß gelöst durch die Gegenstände der unabhängigen Patentansprüche. Vorteilhafte Ausgestaltungsformen mit zweckmäßigen Weiterbildungen des erfindungsgemäßen Verfahrens und des erfindungsgemäßen Kraftfahrzeugs sind Gegenstand der Unteransprüche, der Beschreibung und der Figuren. Vorteilhafte Ausführungsformen des erfindungsgemäßen Verfahrens und deren Vorteile gelten analog auch für das erfindungsgemäße Kraftfahrzeug und umgekehrt.

Im Rahmen des Verfahrens zum Aufbau einer Kommunikationsverbindung eines Kraftfahrzeugs mit einem sich in dessen Umgebung befindlichen Fremdfahrzeug werden zunächst Konfigurationsdaten aus dem Fremdfahrzeug empfangen. Bei dem Fremdfahrzeug handelt es sich um ein weiteres Fahrzeug, insbesondere um ein weiteres Kraftfahrzeug. Die Konfigurationsdaten können eine Bereitschaft des Fremdfahrzeugs zum Aufbau der Kommunikationsverbindung angeben. Alternativ oder zusätzlich können die Konfigurationsdaten Steuerdaten und/oder Protokolldaten umfassen, welche einen Standard der aufzubauenden Kommunikationsverbindung festlegen. Die Konfigurationsdaten können durch eine Sendeeinheit des Fremdfahrzeugs gesendet werden und durch eine Empfangseinheit des Kraftfahrzeugs empfangen werden. Insbesondere werden die Konfigurationsdaten durch die Empfangseinheit des Kraftfahrzeugs direkt, das bedeutet ohne Zwischenstation, aus der Sendeeinheit des Fremdfahrzeugs empfangen. Direkt bedeutet in diesem Kontext insbesondere vermittlungsfrei, beispielsweise ohne dass eine Mobilfunk-Basisstation oder ein Zwischenknoten involviert ist.

In einem weiteren Schritt wird eine Relativposition des Fremdfahrzeugs relativ zu dem Kraftfahrzeug ermittelt. Die Ermittlung der Relativposition des Fremdfahrzeugs kann nötig sein, um die Konfigurationsdaten mit dem für einen Nutzer, insbesondere einen Fahrer, des Kraftfahrzeugs sichtbaren Fremdfahrzeug zu verknüpfen. Die Konfigurationsdaten können dem Fremdfahrzeug anhand dessen Relativposition zugeordnet werden. Hierzu kann das Fremdfahrzeug durch eine Lokalisierungseinheit des Kraftfahrzeugs lokalisiert werden. Beispielsweise kann die Relativposition des Fremdfahrzeugs durch ein an dem Kraftfahrzeug ausgerichtetes virtuelles Koordinatensystem definiert werden. Beispielsweise ist die Relativposition definiert durch einen Abstand zwischen dem Kraftfahrzeug und dem Fremdfahrzeug und einen Winkel zwischen einer Längsachse des Kraftfahrzeugs und einer das Fremdfahrzeug und das Kraftfahrzeug verbindenden Geraden.

Bei dem Ermitteln der Relativposition des Fremdfahrzeugs wird entweder in Umgebungsdaten, die von einer, insbesondere bildgebenden, Umfeldsensorik des Kraftfahrzeugs erfasst werden, ein Abbild des Fremdfahrzeugs anhand von Fahrzeugdaten, die das Fremdfahrzeug charakterisieren und welche Teil der Konfigurationsdaten sind, erkannt oder eine jeweilige Relativposition einer Mehrzahl von Fremdobjekten in der Umgebung des Kraftfahrzeugs als potentielle Relativpositionen des Fremdfahrzeugs anhand der Umgebungsdaten ermittelt und anhand einer Empfangsrichtung, aus welcher die Konfigurationsdaten empfangen werden, und/oder der Konfigurationsdaten die Relativposition des Fremdfahrzeugs aus den potentiellen Relativpositionen ausgewählt.

Da anhand der Konfigurationsdaten die Kommunikationsfähigkeit des Fremdfahrzeugs bekannt und außerdem die Relativposition bekannt ist, kann das Fremdfahrzeug dem Nutzer als möglicher Kommunikationspartner mitgeteilt werden. Für den Nutzer des Kraftfahrzeugs wird eine virtuelle Anzeige bereitgestellt, die das Fremdfahrzeug als möglichen Kommunikationspartner angibt. Die virtuelle Anzeige wird zumindest teilweise anhand der Relativposition des Fremdfahrzeugs und der Konfigurationsdaten des Fremdfahrzeugs bereitgestellt. Die virtuelle Anzeige kann beispielsweise in Form einer textbasierten Übersicht oder einer grafischen Übersicht, insbesondere in Form einer Straßenkarte, in welcher vorzugsweise sowohl das Kraftfahrzeug als auch das Fremdfahrzeug dargestellt sind, dargestellt werden. Die virtuelle Anzeige kann dem Nutzer mittels einer Anzeigeeinheit, beispielsweise einem Bildschirm oder einem Anzeigesystem zur Projektion auf eine Windschutzscheibe und/oder Seitenscheibe des Kraftfahrzeugs, auch Head-Up-Display genannt, oder eine Brille zur Darstellung virtueller Realität bereitgestellt werden. Insbesondere wird eine Kommunikationsfähigkeit und/oder Kommunikationsbereitschaft des Fremdfahrzeugs in der virtuellen Anzeige dargestellt. Eine besonders vorteilhafte Weiterbildung sieht vor, dass die virtuelle Anzeige in Form einer erweiterten Realität, auch augmented reality genannt, bereitgestellt wird. Im Rahmen der erweiterten Realität kann die virtuelle Anzeige, insbesondere eine geeignete Symbolik, einem realen Bild, beispielsweise der Umgebung und insbesondere des Fremdfahrzeugs, überlagert werden. Dies erfolgt insbesondere mittels des Head-Up-Displays oder der Brille zum Anzeigen der virtuellen Realität.

In einem weiteren Schritt wird ein Kommunikationsbefehl von dem Nutzer empfangen, wobei durch den Kommunikationsbefehl das Fremdfahrzeug als Kommunikationspartner ausgewählt wird. Insbesondere ist eine Eingabevorrichtung zum Aussenden des Kommunikationsbefehls ausgebildet. Demnach kann der Kommunikationsbefehl von der Eingabevorrichtung empfangen werden. Mittels der Eingabevorrichtung kann der Nutzer das Fremdfahrzeug als Kommunikationspartner auswählen. Insbesondere kann der Nutzer mittels des Kommunikationsbefehls seinen Wunsch zum Aufbau der Kommunikationsverbindung mit dem Fremdfahrzeug signalisieren. Die Eingabevorrichtung kann durch ein Bedienelement, beispielsweise einen Taster oder einen Drehdrückschalter, durch einen berührungsempfindlichen Bildschirm oder durch eine Sensorik, insbesondere Kamera, zur Gestenerkennung bereitgestellt werden. Insbesondere wird der Kommunikationsbefehl von dem Nutzer durch Auswerten einer Eingabe des Nutzers oder einer Geste des Nutzers empfangen.

In einem weiteren Schritt wird eine direkte Kommunikationsverbindung mit dem Kommunikationspartner, den der Nutzer ausgewählt hat, aufgebaut. Insbesondere wird die direkte Kommunikationsverbindung durch die Sendeeinheit und/oder Empfangseinheit des Kraftfahrzeugs und die Sendeeinheit und/oder Empfangseinheit des Fremdfahrzeugs aufgebaut. Wie oben bereits beschrieben bezeichnet direkt insbesondere vermittlungsfrei, in dem kein Zwischenknoten und/oder keine Mobilfunk-Basisstation involviert ist. Vorzugsweise werden Kommunikationsdaten direkt von der Sendeeinheit des Kraftfahrzeugs an die Empfangseinheit des Fremdfahrzeugs übermittelt beziehungsweise umgekehrt. Vorzugsweise wird die Kommunikationsverbindung mittels der Kommunikationseinheit des Kraftfahrzeugs und der Kommunikationseinheit des Fremdfahrzeugs aufgebaut. Zum Aufbauen der Kommunikationsverbindung können die Kommunikationsdaten durch das Kraftfahrzeug an das Fremdfahrzeug gesendet werden oder durch das Kraftfahrzeug aus dem Fremdfahrzeug empfangen werden.

Insbesondere können über die Kommunikationsverbindung Bilddaten, Textnachrichten und/oder Tondaten gesendet und/oder empfangen werden, das heißt, die Kommunikationsdaten umfassen Bilddaten, Textnachrichten und/oder Tondaten. Beispielsweise kann als die Tondaten eine Sprachnachricht oder ein Gespräch gesendet und/oder empfangen werden. Insbesondere handelt es sich bei dem Gespräch um ein Gespräch, vorzugsweise nach Art eines Telefonats, des Nutzers mit einem Fremdnutzer des Fremdfahrzeugs. Insbesondere werden über die Kommunikationsverbindung die Kommunikationsdaten, also insbesondere die Bilddaten, die Textnachrichten und/oder die Tondaten, zwischen dem Fremdfahrzeug und dem Kraftfahrzeug übertragen.

In einer Weiterbildung der Erfindung ist vorgesehen, dass die Relativposition des Fremdfahrzeugs anhand eines Funksignals zum Empfangen der Konfigurationsdaten durch Trilateration und/oder Triangulation ermittelt wird. Insbesondere wird die Relativposition des Fremdfahrzeugs zumindest teilweise anhand des Funksignals ermittelt. Da das Funksignal genau aus der Richtung empfangen wird, in welcher sich das Fremdfahrzeug befindet, kann die Relativposition des Fremdfahrzeugs auf diese Weise besonders vorteilhaft ermittelt werden.

Die Relativposition des Fremdfahrzeugs wird insbesondere durch Empfangen des Funksignals mittels der Empfangseinheit, zum Beispiel eine Antenne, und zumindest einer weiteren Empfangseinheit und durch Auswerten einer jeweiligen Amplitude und/oder Phase und/oder Laufzeit des Funksignals an der Empfangseinheit und der zumindest einen weiteren Empfangseinheit ermittelt. Die Empfangseinheit und die zumindest eine weitere Empfangseinheit sind vorzugsweise räumlich voneinander getrennt an dem Kraftfahrzeug angeordnet. Beispielsweise ist die Empfangseinheit in einem Heckbereich des Kraftfahrzeugs und die zumindest eine weitere Empfangseinheit in einem Frontbereich des Kraftfahrzeugs angeordnet. In einer Weiterbildung können zwei weitere Empfangseinheiten in einem Frontbereich des Kraftfahrzeugs auf einer in Fahrtrichtung gesehen linken und rechten Seite des Kraftfahrzeugs angeordnet sein. Durch Auswerten der jeweiligen Amplitude und/oder Phase und/oder Laufzeit des Funksignals an den Empfangseinheiten kann die Relativposition des Fremdfahrzeugs ermittelt werden. Beispielsweise kann durch Auswerten der jeweiligen Amplitude eine jeweilige Entfernung des Fremdfahrzeugs von der jeweiligen Empfangseinheit ermittelt werden. Durch Trilateration können sich daraus folgend die Relativpositionen des Fremdfahrzeugs ergeben. Alternativ oder zusätzlich kann eine Differenz der jeweiligen Amplituden als Amplitudendifferenz ausgewertet werden. Alternativ oder zusätzlich kann eine Laufzeitdifferenz des Funksignals zwischen den Empfangseinheiten ermittelt werden. Die Laufzeitdifferenz ist insbesondere der Betrag der Differenz einer Zeit, zu der das Funksignal an der Empfangseinheit detektiert wird, und einer Zeit, zu der das Funksignal an der zumindest einen weiteren Empfangseinheit detektiert wird. Alternativ oder zusätzlich kann eine Phase, insbesondere eine Phasenlage, des Funksignals an der Empfangseinheit und der zumindest einen weiteren Empfangseinheit ausgewertet beziehungsweise verglichen werden. Dadurch kann eine weitere Präzisierung für die Relativposition des Fremdfahrzeugs ermittelt werden.

In weiterer Ausgestaltung der Erfindung ist vorgesehen, dass die jeweiligen Konfigurationsdaten Zustandsdaten und/oder Fahrzeugdaten umfassen, die das Fremdfahrzeug charakterisieren. Die Zustandsdaten können beispielsweise eine Position des Fremdfahrzeugs, beispielsweise eine momentan befahrene Fahrspur, Koordinaten einer Absolutposition des Fremdfahrzeugs oder ein Abstand zu einer Landmarke, beispielsweise ein Verkehrsschild oder eine Ausfahrt, eine Geschwindigkeit des Fremdfahrzeugs oder eine geplante Route des Fremdfahrzeugs beschreiben. Die Fahrzeugdaten können beispielsweise ein äußeres Erscheinungsbild, insbesondere eine Farbe und eine Karosserieform, des Fremdfahrzeugs beschreiben. Insbesondere können die Zustandsdaten und/oder Fahrzeugdaten für das weitere Kraftfahrzeug dem Nutzer mittels der virtuellen Anzeige bereitgestellt werden. Der Nutzer kann dann anhand der Zustandsdaten und/oder Fahrzeugdaten das Fremdfahrzeug als Kommunikationspartner auswählen.

In einer Ausführungsform der Erfindung ist vorgesehen, dass in den Umgebungsdaten, die von einer, insbesondere bildgebenden, Umfeldsensorik des Kraftfahrzeugs erfasst werden, ein Abbild des Fremdfahrzeugs anhand der Konfigurationsdaten erkannt wird. Die Umfeldsensorik kann beispielsweise eine oder mehrere Kameras, zumindest einen Radarsensor, zumindest einen Lidar-Sensor und/oder zumindest einen Ultraschallsensor umfassen. Als bildgebende Umfeldsensorik kann eine Sensorik bezeichnet werden, welche ein Bild und/oder ein Abbild einer Umgebung des Kraftfahrzeugs als Teil der Umgebungsdaten oder als die Umgebungsdaten erfasst. Vorzugsweise wird das Abbild des Fremdfahrzeugs anhand der Zustandsdaten und/oder Fahrzeugdaten, welche Teil der Konfigurationsdaten sind, erkannt. Beispielsweise enthalten die Fahrzeugdaten Angaben zu der Farbe und der Karosserieform des Fremdfahrzeugs. In diesem Beispiel kann in den Umgebungsdaten, zum Beispiel in einem Kamerabild, die Karosserieform und die Farbe des Fremdfahrzeugs erkannt werden. Allgemein kann anhand der Konfigurationsdaten kann ein Abbild des Fremdfahrzeugs in den Umgebungsdaten erkannt werden. Auf diese Weise werden die Konfigurationsdaten mit einer Umgebung des Kraftfahrzeugs verknüpft. Insbesondere können die Konfigurationsdaten dem visuell für den Nutzer erkennbaren Kraftfahrzeug zugeordnet werden.

Vorzugsweise wird die Relativposition des Fremdfahrzeugs unter Bezugnahme auf die Zustandsdaten und/oder Fahrzeugdaten anhand der Umgebungsdaten ermittelt. Beispielsweise wird die Relativposition des Fremdfahrzeugs anhand der Umgebungsdaten ermittelt, wenn das Abbild des Fremdfahrzeugs in den Umgebungsdaten ermittelt wird. Mit anderen Worten kann die Relativposition des Fremdfahrzeugs anhand der Umgebungsdaten ermittelt werden wenn die Konfigurationsdaten mit den Umgebungsdaten verknüpft werden.

Die Genauigkeit der Ermittlung der Relativposition durch Triangulation und/oder Trilateration kann gesteigert werden, indem die Relativposition von Fremdobjekten durch der Umfeldsensorik ermittelt wird und das Funksignal zur Übermittlung der Konfigurationsdaten einem der Fremdobjekte zugeordnet wird. In einer Ausführungsform der Erfindung ist vorgesehen, dass eine jeweilige Relativposition einer Mehrzahl von Fremdobjekten in der Umgebung des Kraftfahrzeugs als potentielle Relativpositionen des Fremdfahrzeugs ermittelt werden und anhand einer Empfangsrichtung, aus welcher die Konfigurationsdaten empfangen werden, und/oder der Konfigurationsdaten, insbesondere der Zustandsdaten und/oder Fahrzeugdaten, die Relativposition des Fremdfahrzeugs aus den potentiellen Relativpositionen ausgewählt wird. Beispielsweise umfasst die Mehrzahl von Fremdobjekten in der Umgebung des Kraftfahrzeugs das Fremdfahrzeug und weitere Fahrzeuge. Insbesondere werden die jeweiligen Relativpositionen anhand der Umgebungsdaten ermittelt. Daraus ergeben sich mehrere potentielle Relativpositionen für das Fremdfahrzeug. Eine dieser potentiellen Relativpositionen kann anhand der Konfigurationsdaten beziehungsweise anhand der Empfangsrichtung, aus welcher die Konfigurationsdaten empfangen werden, insbesondere der Empfangsrichtung des Funksignals zum Übertragen der Konfigurationsdaten, als die Relativposition des Fremdfahrzeugs ausgewählt werden. Insbesondere wird dem Fremdfahrzeug eine der potentiellen Relativpositionen als die Relativposition des Fremdfahrzeugs zugeordnet. Dieses Zuordnen kann beispielsweise anhand des Funksignals zum Empfangen der Konfigurationsdaten durch Trilateration und/oder Triangulation erfolgen. Alternativ oder zusätzlich kann das Zuordnen unter Bezugnahme auf die Zustandsdaten und/oder Fahrzeugdaten erfolgen. In einem Beispiel kann die jeweilige Relativposition eines solchen Fremdobjekts, auf welches das anhand der Fahrzeugdaten übermittelte Erscheinungsbild zutrifft, als die Relativposition des Fremdfahrzeugs ausgewählt werden.

Natürlich kann die Erfindung auch auf mehrere Fremdfahrzeuge angewandt werden. Vorteilhafterweise werden zusätzlich zu den Konfigurationsdaten aus dem Fremdfahrzeug jeweilige Konfigurationsdaten aus den weiteren Fremdfahrzeugen empfangen und eine jeweilige Relativposition für die weiteren Fremdfahrzeuge ermittelt. Als weitere Fremdfahrzeuge werden weitere Fahrzeuge in der Umgebung des Kraftfahrzeugs bezeichnet, insbesondere weitere Fahrzeuge, die von dem bisher beschriebenen Fremdfahrzeug unterschiedlich sind. Als die Fremdfahrzeuge werden im Folgenden die weitere Fremdfahrzeuge und das Fremdfahrzeug bezeichnet. Die virtuelle Anzeige kann das Fremdfahrzeug und die weiteren Fremdfahrzeuge darstellen. Durch den Kommunikationsbefehl können das Fremdfahrzeug und/oder eines oder mehrere der weiteren Fremdfahrzeuge als Kommunikationspartner ausgewählt werden. Insbesondere wird ein Kommunikationsbefehl empfangen, durch welchen das Fremdfahrzeug und/oder eines oder mehrere der Fremdfahrzeuge als Kommunikationspartner ausgewählt werden. Beispielsweise werden durch den Kommunikationsbefehl mehrere der Fremdfahrzeuge als die Kommunikationspartner ausgewählt. Dadurch kann der Nutzer in einer Umgebung in der sich neben dem Fremdfahrzeug noch weitere Fremdfahrzeuge befinden eines oder mehrere der Fremdfahrzeuge als Kommunikationspartner für den Aufbau einer Kommunikationsverbindung auswählen. Wird das Fremdfahrzeug oder eines der weiteren Fremdfahrzeuge als der Kommunikationspartner ausgewählt, so kann der Aufbau der Kommunikationsverbindung mit dem Fremdfahrzeug oder dem weiteren Fremdfahrzeug erfolgen.

In einer Weiterbildung der Erfindung ist vorgesehen, dass mit mehreren Kommunikationspartnern eine Konferenzverbindung aufgebaut wird. Insbesondere wenn durch den Kommunikationsbefehl zwei oder mehr Kommunikationspartner ausgewählt werden, kann eine Konferenzverbindung (Multicast) aufgebaut werden. Bei einer Konferenzverbindung wird insbesondere mit jedem der Kommunikationspartner eine direkte Kommunikationsverbindung aufgebaut. Ferner kann vorgesehen sein, dass unter allen Kommunikationspartnern ebenfalls eine direkte Kommunikationsverbindung aufgebaut wird. Vorzugsweise dient das Kraftfahrzeug als Host der Konferenzverbindung, das bedeutet, dass jedem der Kommunikationspartner Kommunikationsdaten der jeweils anderen Kommunikationspartner durch das Kraftfahrzeug gesendet beziehungsweise übermittelt werden. Alternativ oder zusätzlich kann ein Broadcast aufgebaut werden, das bedeutet, dass mit allen Fremdfahrzeugen eine Verbindung aufgebaut wird.

Ein zweiter Aspekt der Erfindung betrifft ein Kraftfahrzeug mit einer Kommunikationseinrichtung zum Aufbauen einer Kommunikationsverbindung des Kraftfahrzeugs mit einem sich in einer Umgebung befindlichen Fremdfahrzeug. Das Kraftfahrzeug umfasst eine Empfangseinheit zum empfangen von Konfigurationsdaten aus dem Fremdfahrzeug sowie eine Sendeeinheit zum Aufbauen einer direkten Kommunikationsverbindung mit einem Kommunikationspartner. Die Empfangseinheit und die Sendeeinheit können durch eine Sendeeinheit umfasst sein. Außerdem weist das Kraftfahrzeug eine Ermittlungseinheit zum Ermitteln einer Relativposition des Fremdfahrzeugs relativ zu dem Kraftfahrzeug auf. Beispielsweise ist die Ermittlungseinheit als Recheneinheit ausgebildet, welche das Ermitteln der Relativposition anhand der Konfigurationsdaten und/oder anhand eines Funksignals zum empfangen der Konfigurationsdaten ermittelt.

Eine Anzeigeeinheit dient zum Bereitstellen einer virtuellen Anzeige, die das Fremdfahrzeug für einen Nutzer des Kraftfahrzeugs als möglichen Kommunikationspartner angibt. Die Anzeigeeinheit kann zum Bereitstellen der virtuellen Anzeige zumindest teilweise anhand der ermittelten Relativposition des Fremdfahrzeugs und anhand der empfangenen Konfigurationsdaten ausgebildet sein. Eine Eingabevorrichtung ist zum Empfangen eines Kommunikationsbefehls von dem Nutzer ausgebildet, wobei durch den Kommunikationsbefehl das Fremdfahrzeug als der Kommunikationspartner auswählbar ist. Die Anzeigeeinheit und die Eingabevorrichtung können gemeinsam als berührungsempfindlicher Bildschirm ausgebildet sein. Das Kraftfahrzeug ist dazu eingerichtet, ein Verfahren nach einer der im vorhergehenden beschriebenen Ausführungsformen durchzuführen. Das Kraftfahrzeug ist insbesondere als Kraftwagen, vorzugsweise als Personenkraftwagen ausgeführt.

Zusätzlich umfasst das Kraftfahrzeug eine Umfeldsensorik zum Erfassen von Umgebungsdaten. Das Kraftfahrzeug ist ausgebildet, in der Umgebungsdaten ein Abbild des Fremdfahrzeugs anhand der Konfigurationsdaten zu erkennen oder eine jeweilige Relativposition einer Mehrzahl von Fremdobjekten in der Umgebung des Kraftfahrzeugs als potentielle Relativpositionen des Fremdfahrzeugs anhand der Umgebungsdaten zu ermitteln und anhand einer Empfangsrichtung, aus welcher die Konfigurationsdaten empfangen werden, die Relativposition des Fremdfahrzeugs aus den potentiellen Relativpositionen ausgewählt wird.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
Fig. 1 eine schematische Seitenansicht eines Kraftfahrzeugs mit einer Kommunikationseinrichtung zum Aufbauen einer Kommunikationsverbindung; und
Fig. 2 ein Kraftfahrzeug in einer Umgebung mit einem Fremdfahrzeug, mit dem eine Kommunikationsverbindung aufgebaut wird.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

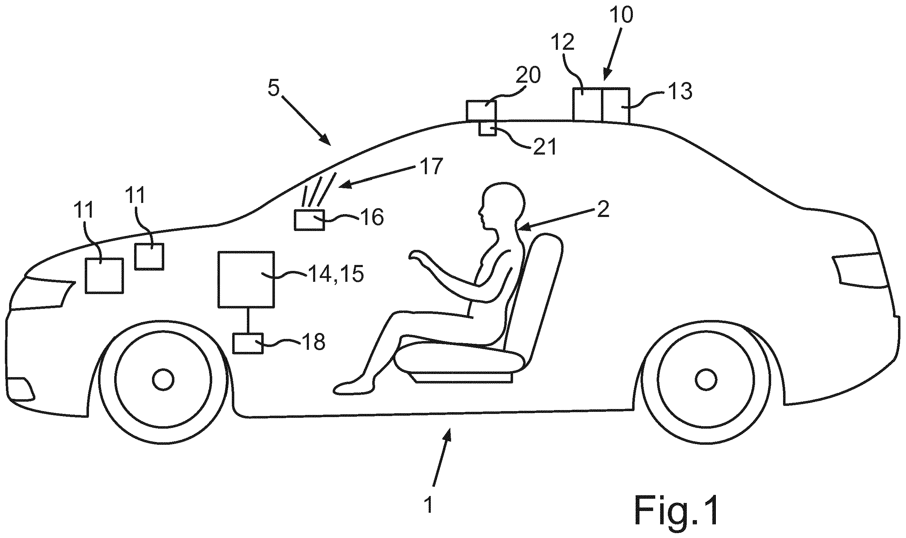

Die Fig. 1 zeigt ein Kraftfahrzeug 1 mit einer Kommunikationseinrichtung 5 zum Aufbauen einer Kommunikationsverbindung 19 des Kraftfahrzeugs 1 mit einem sich in einer Umgebung befindlichen Fremdfahrzeug 30. Das Kraftfahrzeug 1 weist eine Empfangseinheit 12 zum Empfangen von Konfigurationsdaten 32 aus dem Fremdfahrzeug 30 auf. Das Kraftfahrzeug weist vorliegend außerdem eine Sendeeinheit 13 zum Aufbauen einer direkten Kommunikationsverbindung 19 mit dem Fremdfahrzeug 30 als Kommunikationspartner auf. Das Kraftfahrzeug umfasst eine Ermittlungseinheit 18 zum Ermitteln einer Relativposition des Fremdfahrzeugs 30 relativ zu dem Kraftfahrzeug 1. Außerdem weist das Kraftfahrzeug 1 eine Anzeigeeinheit 14, vorliegend ein Bildschirm, vorzugsweise ein berührungsempfindlicher Bildschirm, zum Bereitstellen einer virtuellen Anzeige 4 auf, wobei die virtuelle Anzeige 4 das Fremdfahrzeug 30 als möglichen Kommunikationspartner angibt. Dabei wird das Fremdfahrzeug 30 zumindest teilweise anhand der Konfigurationsdaten und der Relativposition des Fremdfahrzeugs 30 als der mögliche Kommunikationspartner angegeben. Insbesondere wird die virtuelle Anzeige 4 für einen Nutzer 2 des Kraftfahrzeugs 1 bereitgestellt. Eine Eingabevorrichtung 15 ist zum Empfangen eines Kommunikationsbefehls von dem Nutzer 2 ausgebildet. Durch den Kommunikationsbefehl kann der Nutzer 2 das Fremdfahrzeug 30 als den Kommunikationspartner auswählen. Vorzugsweise sind die Eingabevorrichtung 15 und die Anzeigeeinheit 14 als ein berührungsempfindlicher Bildschirm ausgeführt. Alternativ oder zusätzlich kann das Kraftfahrzeug 1 einen Projektor 16 als Anzeigeeinheit 14 aufweisen. Der Projektor 16 kann zum Bereitstellen der virtuellen Anzeige 4 mittels einer Projektion 17 auf ein Fahrzeugbauteil, insbesondere eine Windschutzscheibe des Kraftfahrzeugs 1 ausgebildet sein. Das vorliegende Kraftfahrzeug 1 umfasst außerdem optionale weitere Empfangseinheiten 11. Die Empfangseinheit 12 sowie die Sendeeinheit 13 des Kraftfahrzeugs 1 sind vorliegend durch eine Kommunikationseinheit 10, insbesondere eine Antenne, bereitgestellt.

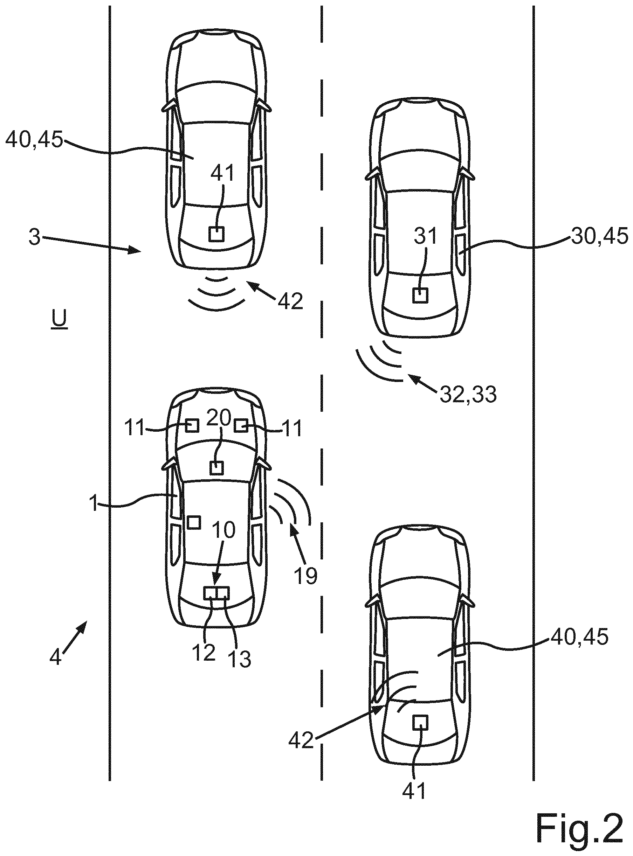

Fig. 2 zeigt die Umgebung des Kraftfahrzeugs 1 in einer schematischen Vogelperspektive. Gleichzeitig stellte Fig. 2 ein Beispiel für die virtuelle Anzeige 4 dar. Das Kraftfahrzeug 1 befindet sich einer Straße 3 und ist umgeben durch das Fremdfahrzeug 30 und weitere Fremdfahrzeuge 40. Das Fremdfahrzeug 30 und die weiteren Fremdfahrzeuge 40 beschreiben in diesem Kontext weitere Fahrzeuge in der Umgebung des Kraftfahrzeugs 1. Die Empfangseinheit 12 beziehungsweise die Kommunikationseinheit sehen des Kraftfahrzeugs 1 empfängt Konfigurationsdaten 32 aus dem Fremdfahrzeug 30. Die Konfigurationsdaten 32 können durch eine Kommunikationseinheit 31 des Fremdfahrzeugs 30 ausgesendet werden. Vorzugsweise empfängt die Empfangseinheit 12 die Konfigurationsdaten 32 direkt aus der Kommunikationseinheit 31 des Fremdfahrzeugs 30. Die Konfigurationsdaten 32 können die Bereitschaft des Fremdfahrzeugs 30 zum Aufbauen beziehungsweise Empfangen einer direkten Kommunikationsverbindung 19 mitteilen. Außerdem können die Konfigurationsdaten 32 eine Position des Fremdfahrzeugs 30 auf der Straße 3 sowie eine Bewegungsrichtung und eine Geschwindigkeit des Fremdfahrzeugs 30 als Zustandsdaten des Fahrzeugs 30 umfassen. Vorzugsweise umfassen die Konfigurationsdaten 32 Fahrzeugdaten, die beispielsweise ein Erscheinungsbild des Fremdfahrzeugs 30 charakterisieren. Beispielsweise enthalten die Fahrzeugdaten Informationen über eine Karosserieform und eine Farbe des Fremdfahrzeugs 30. Optimaler Weise können durch das Kraftfahrzeug 1, insbesondere die Kommunikationseinheit 10, korrespondierende Konfigurationsdaten gesendet werden.

Es kann eine Relativposition des Fremdfahrzeugs 30 relativ zu dem Kraftfahrzeug 1 ermittelt werden. Vorliegend weist das Kraftfahrzeug 1 weitere Empfangseinheiten 11 auf. Die weiteren Empfangseinheiten 11 können als weitere Kommunikationseinheiten ausgebildet sein, welche eine weitere Sendeeinheit umfassen. Die Konfigurationsdaten 32 beziehungsweise ein Funksignal 33 zum Übertragen der Kommunikationsdaten 32 wird von der Empfangseinheit 12 und in weiteren Empfangseinheiten 11 empfangen. Die Konfigurationsdaten 32 beziehungsweise das Funksignal 33 kann durch die Empfangseinheit 12 und die weiteren Empfangseinheiten 11 zu unterschiedlichen Zeitpunkten empfangen werden. Aus den unterschiedlichen Zeitpunkten ergeben sich jeweilige Laufzeitdifferenzen des Funksignals 33 zwischen den Empfangseinheiten 11, 12. Vorliegend, gemäß Fig. 2, wird das Funksignal 33 zunächst nacheinander durch die weiteren Empfangseinheiten 11 und zuletzt durch die Empfangseinheit 12 empfangen. Je später eine der Empfangseinheiten 11, 12 das Funksignal 33 empfängt, desto weiter ist diese von dem Fremdfahrzeug 30 beziehungsweise die Kommunikationseinheit 31 des Fremdfahrzeugs 30 entfernt. Daraus lässt sich anhand von Trilateration beziehungsweise Triangulation die Position des Fremdfahrzeugs 30 ermitteln. Alternativ oder zusätzlich kann eine Phase und/oder eine Amplitude des Funksignals 33 ausgewertet werden. Beispielsweise ist die Amplitude des Funksignals 33 größer, umso näher sich die jeweilige Empfangseinheit 11, 12 zu dem Fremdfahrzeug 30 befindet.

Alternativ oder zusätzlich kann die Relativposition des Fremdfahrzeugs 30 mittels einer Umfeldsensorik 20 des Kraftfahrzeugs 1 ermittelt werden. Die Umfeldsensorik 20 ist insbesondere als Kamera, als Radarsensor, als Lidar-Sensor oder als Ultraschallsensor ausgebildet. Die Umfeldsensorik 20 erfasst ein, insbesondere bildhaftes, Abbild der Umgebung U als Umgebungsdaten. Die Umgebungsdaten können mit den Konfigurationsdaten 32 und/oder mit der Auswertung des Funksignals 33 durch Triangulation beziehungsweise Trilateration verknüpft werden. Beispielsweise werden anhand der Umgebungsdaten jeweilige Relativposition in einer Mehrzahl von Fremdobjekten 45, vorliegend das Fremdfahrzeug 30 und die weiteren Fremdfahrzeuge 40, als potentielle Relativpositionen des Fremdfahrzeugs 30 ermittelt. Anhand einer Empfangsrichtung und/oder Entfernung, aus welcher die Konfigurationsdaten 32 beziehungsweise das Funksignal 33 empfangen wird, kann eine der potentiellen Relativpositionen als die Relativposition des Fremdfahrzeugs 30 ausgewählt beziehungsweise festgelegt werden. Insbesondere wird eine der potentiellen Relativpositionen des Fremdfahrzeugs 30 durch die Triangulation beziehungsweise die Trilateration anhand des Funksignals 33 ausgewählt werden.

Alternativ oder zusätzlich kann die Relativposition des Fremdfahrzeugs 30 aus den potentiellen Relativpositionen des Fremdfahrzeugs 30 anhand der Konfigurationsdaten, insbesondere der Zustandsdaten und/oder Fahrzeugdaten, ausgewählt werden. Beispielsweise wird die jeweilige Relativposition eines solchen Fremdobjekts 45, welches mit den Zustandsdaten und/oder Fahrzeugdaten übereinstimmt, als die Relativposition des Fremdfahrzeugs 30 ausgewählt. Beispielsweise wird die jeweilige Relativposition eines der Fremdobjekte 45, welches in Farbe und Karosserieform mit der durch die Fahrzeugdaten beschriebenen Fahrzeug und Karosserieform übereinstimmt, als die Relativposition des Fremdfahrzeugs 30 ausgewählt. Alternativ oder zusätzlich kann beispielsweise überprüft werden, ob die Zustandsdaten des Fremdobjekts 45, welche aus den Umgebungsdaten extrahiert werden können, mit den Zustandsdaten, welche als Teil der Konfigurationsdaten empfangen werden, übereinstimmen. Stimmen die Zustandsdaten überein, so kann die jeweilige Relativposition des Fremdobjekts 45 als die Relativposition des Fremdfahrzeugs 30 ausgewählt werden.

In den Umgebungsdaten kann insbesondere ein Abbild des Fremdfahrzeugs 30 erkannt werden. Beispielsweise wird in Umgebungsdaten ein Abbild des Fremdfahrzeugs 30 gesucht beziehungsweise erkannt. Insbesondere wird das Abbild des Fremdfahrzeugs in den Umgebungsdaten durch Erkennen charakteristischer Merkmale, beispielsweise Karosserieform oder Farbe, die als Teil der Fahrzeugdaten mit den Konfigurationsdaten 32 empfangen werden, in den Umgebungsdaten erkannt. Durch die Umfeldsensorik 20 kann eine Relativposition eines Fremdobjekts, welches durch das Abbild repräsentiert ist, als die Relativposition des Fremdfahrzeugs 30 ermittelt werden.

Berechnungen und Auswertungen zum Ermitteln der Relativposition des Fremdfahrzeugs 30 werden insbesondere durch die Ermittlungseinheit 18 ausgeführt.

Analog zu den Konfigurationsdaten 32 des Fremdfahrzeugs 30 können weitere Konfigurationsdaten 42 von den weiteren Fremdfahrzeugen 40 beziehungsweise von deren Kommunikationseinrichtungen 41 empfangen werden. Eine jeweilige Relativposition der weiteren Fremdfahrzeuge 40 relativ zu dem Kraftfahrzeug 1 kann analog zu der Relativposition des Fremdfahrzeugs 30 ermittelt werden.

Durch die Anzeigeeinheit 14 wird dem Nutzer 2 des Kraftfahrzeugs 1 eine virtuelle Anzeige 4 bereitgestellt, die das Fremdfahrzeug 30 als möglichen Kommunikationspartner angibt. Optionaler Weise können mittels der virtuellen Anzeige 4 auch die weiteren Fremdfahrzeuge 40 als möglichen Kommunikationspartner angegeben werden. Die virtuelle Anzeige 4 wird zumindest teilweise anhand der Relativposition des Fremdfahrzeugs 30 und der Konfigurationsdaten 32 des Fremdfahrzeugs 30 bereitgestellt. Optionaler Weise kann die virtuelle Anzeige 4 zumindest teilweise anhand der jeweiligen Relativpositionen der weiteren Fremdfahrzeuge 40 und/oder anhand der weiteren Kommunikationsdaten 42 der weiteren Fremdfahrzeuge 40 bereitgestellt werden. Die virtuelle Anzeige 4 kann gemäß Fig. 2 dem Nutzer 2 das Fahrzeug 1 und/oder das Fremdfahrzeug 30 und/oder die weiteren Fremdfahrzeuge 40 beispielsweise aus einer Perspektivansicht, aus einer Kartenansicht oder aus einer Vogelperspektive zeigen. Alternativ kann die virtuelle Anzeige 4 textbasiert bereitgestellt werden, wobei das Fremdfahrzeug 30 und/oder die weiteren Fremdfahrzeuge 40 durch Positionsangaben wie beispielsweise "vorne", "hinten" oder "rechts" charakterisiert beziehungsweise dargestellt werden.

Mittels der virtuellen Anzeige 4 kann dem Nutzer 2 angezeigt werden, dass das Fremdfahrzeug 30 und/oder die weiteren Fremdfahrzeuge 40 eine Kommunikationseinrichtung zum Aufbauen der Kommunikationsverbindung 19 aufweisen und/oder für den Aufbau der Kommunikationsverbindung 19 durch das Kraftfahrzeug 1 zur Verfügung stehen. Vorteilhafterweise wird die virtuelle Anzeige 4 in Form einer erweiterten Realität, auch augmented reality genannt, dargestellt. Dabei können durch die Projektion 17 das Fremdfahrzeug 30 und/oder die weiteren Fremdfahrzeuge 40 mit einem Symbol oder einer Farbe überlagert und/oder gekennzeichnet werden. Beispielsweise können weitere Fahrzeuge, die eine Kommunikationseinrichtung zum Aufbauen der Kommunikationsverbindung 19 aufweisen, grün dargestellt werden und weitere Fahrzeuge, die keine Kommunikationseinrichtung zum Aufbauen der Kommunikationsverbindung 19 aufweisen, rot dargestellt werden.

Mittels der Eingabevorrichtung 15 wird ein Kommunikationsbefehl von dem Nutzer 2 empfangen, wobei durch den Kommunikationsbefehl das Fremdfahrzeug 30 und/oder eines oder mehrere der weiteren Fremdfahrzeuge 40 als der Kommunikationspartner oder als die Kommunikationspartner ausgewählt werden. Beispielsweise tippt der Nutzer 2 auf dem berührungsempfindlichen Bildschirm, der die Anzeigeeinheit 14 und die Eingabevorrichtung 15 ausbildet, auf dasjenige der Fremdfahrzeuge 30, 40, also das Fremdfahrzeug 30 und/oder eines oder mehrere der weiteren Fremdfahrzeuge 40, mit dem er den Aufbau der direkten Kommunikationsverbindung 19 wünscht. Dieser Kommunikationsbefehl kann als "anrufen" bezeichnet werden. Alternativ oder zusätzlich kann der Nutzer 2 auf dasjenige der Fremdfahrzeuge 30, 40 zeigen, mit dem er den Aufbau der direkten Kommunikationsverbindung 19 wünscht. Das Zeigen des Nutzers 2 kann durch eine Sensorik 21 zur Gestenerkennung, beispielsweise eine Kamera in einem Innenraum des Kraftfahrzeugs 1, als Kommunikationsbefehl empfangen werden. Beispielsweise zeigt der Nutzer 2 in der virtuellen Anzeige 4, die durch die Projektion 17 bereitgestellt ist, auf das Abbild des gewünschten Fremdfahrzeugs 30, 40 in der virtuellen Anzeige 4. Besonders vorteilhafter Weise zeigt der Nutzer 2 direkt auf das reale Fremdfahrzeug 30, 40, dass als Kommunikationspartner ausgewählt werden soll.

Durch die Sendeeinheit 13 wird die direkte Kommunikationsverbindung 19 mit dem Kommunikationspartner aufgebaut. Beispielsweise wird die direkte Kommunikationsverbindung 19 zwischen dem Kraftfahrzeug 1 und dem Kommunikationspartner, beispielsweise dem Fremdfahrzeug 30, über Bluetooth oder über WLAN aufgebaut. Eine Reichweite der Kommunikationsverbindung 19 kann dabei auf wenige 10 m, beispielsweise 10 m, 20 m, 30 m, 40 m oder 50 m begrenzt sein, da eine Kommunikation nur mit einem Nachbarfahrzeug oder einem übernächsten Nachbarfahrzeug erfolgen soll. Die Eröffnung und der Betrieb der Kommunikationsverbindung 19 erfolgt insbesondere über übliche, aus dem Stand der Technik bekannte Protokollmechanismen. Dabei können neben einer reinen sprach Verbindung, insbesondere Sprachdaten oder Sprachnachrichten, auch weitere Daten, beispielsweise Bilddaten, Dokumente, insbesondere Textdokumente, E-Mails oder Kurznachrichten, übertragen werden. Als Bilddaten kommen beispielsweise Bilddaten von einer Fahrerbeobachtungskamera oder von einem mit dem Kraftfahrzeug 1 gekoppelten Mobiltelefon bereitgestellte Bilder infrage. Werden mehrere der Fremdfahrzeuge 30, 40 als Kommunikationspartner ausgewählt, so kann eine lokale Konferenzschaltung beziehungsweise Konferenzverbindung aufgebaut werden. Dabei kann insbesondere das Kraftfahrzeug 1 als Host dienen, welcher zu übertragende Kommunikationsdaten zwischen den unterschiedlichen Kommunikationspartnern verteilt. Wird aufgrund des Kommunikationsbefehls von dem Nutzer 2 die Kommunikationsverbindung 19 aufgebaut, kann dem Kommunikationspartner, also beispielsweise dem Fremdfahrzeug 30 oder einem weiteren Nutzer, insbesondere des Fremdfahrzeugs 30, sichtbar und/oder hörbar signalisiert werden, dass eine eingehende Kommunikationsverbindung 19 aufgebaut werden soll. Insbesondere kann eine Erlaubnis des weiteren Nutzers hierzu abgefragt werden. Insbesondere umfassen das Fremdfahrzeug 30 und/oder die weiteren Fremdfahrzeuge 40 ebenfalls eine Kommunikationseinrichtung analog zu der Kommunikationseinrichtung 5 des Kraftfahrzeugs 1. Dem weiteren Nutzer des Kommunikationspartners, beispielsweise des Fremdfahrzeugs 30, kann angezeigt werden, welches Fahrzeug in der Umgebung U die Kommunikationsverbindung aufbauen will beziehungsweise ein Gespräch eröffnen will. Alternativ oder zusätzlich kann angezeigt werden, in welcher Richtung sich das Kraftfahrzeug 1, welches das Gespräch eröffnen will, in der Umgebung U befindet. Insbesondere kann das Gespräch beziehungsweise die direkte Kommunikationsverbindung 19 nach einer Bestätigung durch den weiteren Fahrer aufgebaut werden.

Durch das Ausführungsbeispiel ist insgesamt gezeigt, wie die Kommunikationsverbindung 19 des Kraftfahrzeugs 1 beispielsweise mit dem Fremdfahrzeug 30 aufgebaut werden kann. Insbesondere kann das Fremdfahrzeug 30 ein beliebiges Fahrzeug in der Umgebung U des Kraftfahrzeugs 1 sein, welches dem Nutzer 2 zunächst nicht bekannt ist.

## Patentansprüche

1. Verfahren zum Aufbau einer Kommunikationsverbindung (19) eines Kraftfahrzeugs (1) mit einem sich in dessen Umgebung befindlichen Fremdfahrzeug (30), mit den Schritten:
- Empfangen von Konfigurationsdaten (32) aus dem Fremdfahrzeug (30),
- Ermitteln einer Relativposition des Fremdfahrzeugs (30) relativ zu dem Kraftfahrzeug (1), wobei
- zum Ermitteln der Relativposition in Umgebungsdaten, die von einer Umfeldsensorik (20) des Kraftfahrzeugs (1) erfasst werden, ein Abbild des Fremdfahrzeugs (30) anhand von Fahrzeugdaten, die das Fremdfahrzeug charakterisieren und welche Teil der Konfigurationsdaten sind, erkannt wird oder wobei eine jeweilige Relativposition einer Mehrzahl von Fremdobjekten (45) in der Umgebung (U) des Kraftfahrzeugs (1) als potentielle Relativpositionen des Fremdfahrzeugs (30) anhand der Umgebungsdaten ermittelt werden und anhand einer Empfangsrichtung, aus welcher die Konfigurationsdaten (32) empfangen werden, die Relativposition des Fremdfahrzeugs (30) aus den potentiellen Relativpositionen ausgewählt wird,
- Bereitstellen einer virtuellen Anzeige (4), die das Fremdfahrzeug (30) als möglichen Kommunikationspartner angibt, zumindest teilweise anhand der Relativposition des Fremdfahrzeugs (30) und der Konfigurationsdaten (32), für einen Nutzer des Kraftfahrzeugs (1),
- Empfangen eines Kommunikationsbefehls von dem Nutzer (2), wobei durch den Kommunikationsbefehl das Fremdfahrzeug (30) als Kommunikationspartner ausgewählt wird,
- Aufbauen einer direkten Kommunikationsverbindung mit dem Kommunikationspartner.

2. Verfahren nach Anspruch 1,
**dadurch gekennzeichnet, dass**
über die Kommunikationsverbindung (19) Bilddaten, Textnachrichten und/oder Tondaten gesendet und/oder empfangen werden.

3. Verfahren nach einem der vorhergehenden Ansprüche,
**dadurch gekennzeichnet, dass**
die Relativposition des Fremdfahrzeugs (30) anhand eines Funksignals (33) zum Empfangen der Konfigurationsdaten (32) durch Trilateration ermittelt wird.

4. Verfahren nach Anspruch 3,
**dadurch gekennzeichnet, dass**
die Relativposition des Fremdfahrzeugs (30) durch Empfangen des Funksignals (33) mittels einer Empfangseinheit (12) und zumindest einer weiteren Empfangseinheit (11) und durch Auswerten einer jeweiligen Amplitude und/oder Phase und/oder Laufzeit des Funksignals (33) an der Empfangseinheit (12) und der zumindest einen weiteren Empfangseinheit (11) ermittelt wird.

5. Verfahren nach einem der vorhergehenden Ansprüche,
**dadurch gekennzeichnet, dass**
die Umgebungsdaten von einer bildgebenden Umfeldsensorik (20) des Kraftfahrzeugs (1) erfasst werden.

6. Verfahren nach einem der vorhergehenden Ansprüche,
**dadurch gekennzeichnet, dass**
die jeweiligen Konfigurationsdaten (19) Zustandsdaten und/oder Fahrzeugdaten umfassen, die das Fremdfahrzeug (30) charakterisieren.

7. Verfahren nach Anspruch 6,
**dadurch gekennzeichnet, dass**
die Relativposition des Fremdfahrzeugs (30) unter Bezugnahme auf die Zustandsdaten und/oder Fahrzeugdaten anhand der Umgebungsdaten ermittelt wird.

8. Verfahren nach einem der vorhergehenden Ansprüche,
**dadurch gekennzeichnet, dass**
anhand der Konfigurationsdaten (32) die Relativposition des Fremdfahrzeugs (30) aus den potentiellen Relativpositionen ausgewählt wird.

9. Verfahren nach einem der vorhergehenden Ansprüche,
**dadurch gekennzeichnet, dass**
- zusätzlich zu den Konfigurationsdaten (32) aus dem Fremdfahrzeug (30) jeweilige Konfigurationsdaten (42) aus weiteren Fremdfahrzeugen (40) empfangen werden,
- eine jeweilige Relativposition für die weiteren Fremdfahrzeuge (40) ermittelt wird,
- die virtuelle Anzeige (4) das Fremdfahrzeug (30) und die weiteren Fremdfahrzeuge (40) betrifft, und
- durch den Kommunikationsbefehl das Fremdfahrzeug (30) und/oder eines oder mehrere der weiteren Fremdfahrzeuge (40) als Kommunikationspartner ausgewählt werden.

10. Verfahren nach Anspruch 9,
**dadurch gekennzeichnet, dass**
mit mehreren Kommunikationspartnern eine Konferenzverbindung aufgebaut wird.

11. Kraftfahrzeug (1) mit einer Kommunikationseinrichtung (5) zum Aufbauen einer Kommunikationsverbindung (19) des Kraftfahrzeugs (1) mit einem sich in einer Umgebung (U) befindlichen Fremdfahrzeug (30), mit
- eine Empfangseinheit (12) zum Empfangen von Konfigurationsdaten (32) aus dem Fremdfahrzeug (30),
- einer Ermittlungseinheit (18) zum Ermitteln einer Relativposition des Fremdfahrzeugs (30) relativ zu dem Kraftfahrzeug (1),
- einer Anzeigeeinheit (14) zum Bereitstellen einer virtuellen Anzeige (4), die das Fremdfahrzeug (30) als möglichen Kommunikationspartner angibt, zumindest teilweise anhand der Relativposition des Fremdfahrzeugs (30) und der Konfigurationsdaten (32), für einen Nutzer (2) des Kraftfahrzeugs (1),
- einer Eingabevorrichtung (15) zum Empfangen eines Kommunikationsbefehls von dem Nutzer (2), wobei durch den Kommunikationsbefehl das Fremdfahrzeug (30) als der Kommunikationspartner auswählbar ist,
- eine Sendeeinheit (13) zum Aufbauen einer direkten Kommunikationsverbindung (19) mit dem Kommunikationspartner, und
- einer Umfeldsensorik (20) zum Erfassen von Umgebungsdaten,
- wobei das Kraftfahrzeug (1) ausgebildet ist, in der Umgebungsdaten ein Abbild des Fremdfahrzeugs (30) anhand von Fahrzeugdaten, die das Fremdfahrzeug charakterisieren und welche Teil der Konfigurationsdaten sind, zu erkennen oder eine jeweilige Relativposition einer Mehrzahl von Fremdobjekten (45) in der Umgebung (U) des Kraftfahrzeugs (1) als potentielle Relativpositionen des Fremdfahrzeugs (30) anhand der Umgebungsdaten zu ermitteln und anhand einer Empfangsrichtung, aus welcher die Konfigurationsdaten (32) empfangen werden, die Relativposition des Fremdfahrzeugs (30) aus den potentiellen Relativpositionen ausgewählt wird.

## Claims

1. Method for establishing a communication link (19) between a motor vehicle (1) and a third-party vehicle (30) located in the environment of the motor vehicle, having the steps:
- receiving configuration data (32) from the third-party vehicle (30),
- determining a relative position of the third-party vehicle (30) relative to the motor vehicle (1), wherein
- in order to determine the relative position, in environmental data detected by an environmental sensor (20) of the motor vehicle (1), an image of the third-party vehicle (30) is identified using vehicle data which characterise the third-party vehicle and which are part of the configuration data, or wherein a respective relative position of a plurality of external objects (45) in the environment (U) of the motor vehicle (1) are determined as potential relative positions of the third-party vehicle (30) using the environmental data, and, based on a receiving direction from which the configuration data (32) are received, the relative position of the third-party vehicle (30) is selected from the potential relative positions,
- providing a virtual display (4) which indicates the third-party vehicle (30) as a possible communication partner, at least partially based on the relative position of the third-party vehicle (30) and the configuration data (32), for a user of the motor vehicle (1),
- receiving a communication command from the user (2), the third-party vehicle (30) being selected as the communication partner by means of the communication command,
- establishing a direct communication link with the communication partner.

2. Method according to claim 1,
**characterised in that**
image data, text messages and/or audio data are transmitted and/or received via the communication link (19).

3. Method according to any of the preceding claims,
**characterised in that**
the relative position of the third-party vehicle (30) is determined by trilateration using a radio signal (33) for receiving the configuration data (32).

4. Method according to claim 3,
**characterised in that**
the relative position of the third-party vehicle (30) is determined by receiving the radio signal (33) by means of a receiving unit (12) and at least one further receiving unit (11) and by evaluation of a respective amplitude and/or phase and/or transit time of the radio signal (33) at the receiving unit (12) and the at least one further receiving unit (11).

5. Method according to any of the preceding claims,
**characterised in that**
the environmental data are detected by an image-generating environmental sensor (20) of the motor vehicle (1).

6. Method according to any of the preceding claims,
**characterised in that**
the respective configuration data (19) comprise status data and/or vehicle data which characterise the third-party vehicle (30).

7. Method according to claim 6,
**characterised in that**
the relative position of the third-party vehicle (30) is determined with reference to the status data and/or the vehicle data using the environmental data.

8. Method according to any of the preceding claims,
**characterised in that**
the relative position of the third-party vehicle (30) is selected from the potential relative positions using the configuration data (32).

9. Method according to any of the preceding claims,
**characterised in that**
- in addition to the configuration data (32) from the third-party vehicle (30), respective configuration data (42) are received from further third-party vehicles (40),
- a respective relative position of the further third-party vehicles (40) is determined,
- the virtual display (4) involves the third-party vehicle (30) and the further third-party vehicles (40), and
- the third-party vehicle (30) and/or one or more of the further third-party vehicles (40) are selected as communication partners by means of the communication command.

10. Method according to claim 9,
**characterised in that**
a conference link is established with a plurality of communication partners.

11. Motor vehicle (1) having a communication device (5) for establishing a communication link (19) between the motor vehicle (1) and a third-party vehicle (30) located in an environment (U), having:
- a receiving unit (12) for receiving configuration data (32) from the third-party vehicle (30),
- a determining unit (18) for determining a relative position of the third-party vehicle (30) relative to the motor vehicle (1),
- a display unit (14) for providing a virtual display (4) which indicates the other vehicle (30) as a possible communication partner, at least partially based on the relative position of the third-party vehicle (30) and the configuration data (32), for a user (2) of the motor vehicle,
- an input device (15) for receiving a communication command from the user (2), the third-party vehicle (30) being selectable as the communication partner by means of the communication command,
- a transmitting unit (13) for establishing a direct communication link (19) with the communication partner, and
- an environmental sensor (20) for detecting environmental data,
- wherein the vehicle (1) is configured to identify an image of the third-party vehicle (30) using vehicle data which characterise the third-party vehicle and which are part of the configuration data, or to determine a respective relative position of a plurality of external objects (45) in the environment (U) of the motor vehicle (1) as potential relative positions of the third-party vehicle (30) using the environmental data and, based on a receiving direction from which the configuration data (32) are received, the relative position of the other vehicle (30) is selected from the potential relative positions.

## Revendications

1. Procédé d'établissement d'une liaison de communication (19) d'un véhicule automobile (1) avec un véhicule tiers (30) se trouvant dans l'environnement dudit véhicule automobile, avec les étapes :
- réception de données de configuration (32) en provenance du véhicule tiers (30),
- détermination d'une position relative du véhicule tiers (30) par rapport au véhicule automobile (1),
- dans lequel, pour la détermination de la position relative, une image du véhicule tiers (30) est reconnue dans des données d'environnement, qui sont détectées par un système capteur d'environnement (20) du véhicule automobile (1), à l'aide de données de véhicule qui caractérisent le véhicule tiers et qui font partie des données de configuration ou dans lequel une position relative respective d'une multiplicité d'objets tiers (45) dans l'environnement (U) du véhicule automobile (1) est détectée comme positions relatives potentielles du véhicule tiers (30) à l'aide des données d'environnement et, à l'aide d'une direction de réception à partir de laquelle les données de configuration (32) sont reçues, la position relative du véhicule tiers (30) est sélectionnée parmi les positions relatives potentielles,
- mise à disposition d'un affichage virtuel (4) qui signale le véhicule tiers (30) comme possible correspondant de communication, au moins en partie à l'aide de la position relative du véhicule tiers (30) et des données de configuration (32), pour un utilisateur du véhicule automobile (1),
- réception d'une instruction de communication de l'utilisateur (2), instruction de communication par laquelle le véhicule tiers (30) est sélectionné comme correspondant de communication,
- établissement d'une liaison de communication directe avec le correspondant de communication.

2. Procédé selon la revendication 1,
**caractérisé en ce que**
des données vidéo, des messages de texte et/ou des données audio sont émis et/ou reçus par l'intermédiaire de la liaison de communication (19).

3. Procédé selon l'une quelconque des revendications précédentes,
**caractérisé en ce que**
la position relative du véhicule tiers (30) est déterminée à l'aide d'un signal radio (33) pour la réception des données de configuration (32) par trilatération.

4. Procédé selon la revendication 3,
**caractérisé en ce que**
la position relative du véhicule tiers (30) est déterminée par réception du signal radio (33) au moyen d'une unité réceptrice (12) et d'au moins une autre unité réceptrice (11) et par évaluation d'une amplitude et/ou phase et/ou temps de propagation respectifs du signal radio (33) au niveau de l'unité réceptrice (12) et de l'au moins une autre unité réceptrice (11).

5. Procédé selon l'une quelconque des revendications précédentes,
**caractérisé en ce que**
les données d'environnement sont détectées par un système capteur d'environnement (20), générateur d'images, du véhicule automobile (1).

6. Procédé selon l'une quelconque des revendications précédentes,
**caractérisé en ce que**
les données de configuration (19) respectives comprennent des données d'état et/ou des données de véhicule qui caractérisent le véhicule tiers (30).

7. Procédé selon la revendication 6,
**caractérisé en ce que**
la position relative du véhicule tiers (30) est déterminée à l'aide des données d'environnement en tenant compte des données d'état et/ou des données de véhicule.

8. Procédé selon l'une quelconque des revendications précédentes,
**caractérisé en ce que**,
à l'aide des données de configuration (32), la position relative du véhicule tiers (30) est sélectionnée parmi les positions relatives potentielles.

9. Procédé selon l'une quelconque des revendications précédentes,
**caractérisé en ce que**
- en plus des données de configuration (32) en provenance du véhicule tiers (30), des données de configuration (42) respectives en provenance d'autres véhicules tiers (40) sont reçues,
- une position relative respective pour les autres véhicules tiers (40) est déterminée,
- l'affichage virtuel (4) concerne le véhicule tiers (30) et les autres véhicules tiers (40),
- par l'instruction de communication, le véhicule tiers (30) et/ou un ou plusieurs des autres véhicules tiers (40) sont sélectionnés comme correspondant de communication.

10. Procédé selon la revendication 9,
**caractérisé en ce**
**qu'**une liaison en conférence est établie avec plusieurs correspondants de communication.

11. Véhicule automobile (1) avec un dispositif de communication (5) pour l'établissement d'une liaison de communication (19) du véhicule automobile (1) avec un véhicule tiers (30) se trouvant dans un environnement (U), avec
- une unité réceptrice (12) pour recevoir des données de configuration (32) en provenance du véhicule tiers (30),
- une unité de détermination (18) pour déterminer une position relative du véhicule tiers (30) par rapport au véhicule automobile (1),
- une unité d'affichage (14) pour mettre à disposition un affichage virtuel (4) qui signale le véhicule tiers (30) comme possible correspondant de communication, au moins en partie à l'aide de la position relative du véhicule tiers (30) et des données de configuration (32), pour un utilisateur (2) du véhicule automobile (1),
- un dispositif d'entrée (15) pour recevoir une instruction de communication de l'utilisateur (2), instruction de communication par laquelle le véhicule tiers (30) peut être sélectionné comme correspondant de communication,
- une unité émettrice (13) pour établir une liaison de communication directe (19) avec le correspondant de communication, et
- un système capteur d'environnement (20) pour détecter des données d'environnement,
- dans lequel le véhicule automobile (1) est conçu pour, dans les données d'environnement, reconnaître une image du véhicule tiers (30) à l'aide de données de véhicule qui caractérisent le véhicule tiers et qui font partie des données de configuration ou pour déterminer une position relative respective d'une multiplicité d'objets tiers (45) dans l'environnement (U) du véhicule automobile (1) comme positions relatives potentielles du véhicule tiers (30) à l'aide des données d'environnement et sélectionner la position relative du véhicule tiers (30) parmi les positions relatives potentielles à l'aide d'une direction de réception à partir de laquelle les données de configuration (32) sont reçues.
